# EUROPÄISCHE PATENTANMELDUNG

(11) **EP 0 708 272 A1**
(43) Veröffentlichungstag der Anmeldung: **24.04.1996**
(21) Anmeldenummer: 94116347.9
(22) Anmeldetag: 17.10.1994
(51) Int. Cl.: F16H 13/08

(54) **Kompaktes Umlaufreduziergetriebe**

(71) Anmelder: Jurinjak, Zvonimir, HR-51000 Rijeka (HR)
(72) Erfinder: Jurinjak, Zvonimir, HR-51000 Rijeka (HR)
(74) Vertreter: Klunker . Schmitt-Nilson . Hirsch

(57) **Zusammenfassung**

Bei einem Umlaufreduziergetriebe werden statt Zahnrädern lediglich Wälzkörper eingesetzt, die Kräfte von einer Antriebs- auf eine Abtriebswelle allein durch Reibung zwischen den Wälzkörpern und entsprechenden Laufflächen übertragen, wodurch ein Durchrutschen der Getriebeteile bei einer kurzzeitigen Überbelastung ermöglicht wird.

## Beschreibung

Die Erfindung betrifft ein Untersetzungsgetriebe kompakter Bauart in Form eines Umlaufgetriebes mit einer zentralen Drehachse für alle beweglichen Getriebeteile.

Viele Maschinen sind Belastungen ausgesetzt, wie z.B. Rüttelungen, Schlägen oder anderen momentanen Überbelastungen, gegen die der Antrieb der Maschine geschützt werden muß. In solchen Fällen wird häufig ein Reibgetriebe zwischen Antriebs- und Abtriebsseite verwendet, bei denen das Kraftübertragungselement bei Überbelastung durchrutscht, so daß eine außergewöhnliche Belastung an der Abtriebseite des Getriebes nicht auf die Antriebsseite, d.h. auf den Motor, zurückwirkt.

Aus dem Stand der Technik sind zahlreiche Lösungen von Getrieben mit Kraftübertragung durch Reibung bekannt. Beispielhaft seien hier das Reibradgetriebe und das Riemengetriebe genannt. Solche Getriebe beanspruchen eine gewisse Baugröße, da ihre Antriebs- und Abtriebswellen auf unterschiedlichen Drehachsen liegen. Eine zentrale Antriebs- und Abtriebsdrehachse kann bei den genannten Getrieben nur erreicht werden, wenn sie mehrstufig ausgeführt werden. Dann aber fällt die Drehachse der Zwischenstufe nicht mit der Zentralachse zusammen - eine Verringerung der Baugröße wird so also nicht erreicht.

Solche Reibgetriebe weisen außerdem aufgrund der Reiboberflächen, die zur Maximierung des Reibkoeffizienten normalerweise aus Gummi oder aus Kunststoff bestehen, relativ hohe Übertragungsverluste auf.

Kompaktere Getriebe mit nur einer Zentralachse sind z.B. als Umlauf- bzw. Planetengetriebe bekannt. In Umlaufgetrieben läuft ein Planetenrad zwischen einem feststehenden Teil des Getriebegehäuses und einem angetriebenen Sonnenrad, so daß es sich einerseits um seine eigene Achse und andererseits um die Zentralachse, d.h. um die Achse des Sonnenrades dreht. Eine geeignete Verbindung des umlaufenden Planetenrades mit einem Abtriebselement gestattet schon für einstufige Ausführungen ein Zusammenfallen der Antrieb- und Abtriebsachse.

Solche Umlaufgetriebe sind im allgemeinen als Zahnradgetriebe ausgebildet und übertragen Kräfte daher formschlüssig. Sie haben aufgrund ihrer üblicherweise mit Zahnrädern verwendeten Materialien, wie z. B. Stahl, geringere Übertragungsverluste als Reibgetriebe, aber bei einer Überbelastung können Zahnbrüche oder sonstige Schäden auftreten, da ein Durchrutschen der Kraftübertragungselemente nicht möglich ist.

Die Erfindung hat zur Aufgabe, ein reibschlüssiges Umlaufreduziergetriebe zur Verfügung zu stellen, welches zum einen im Falle von Überbelastungen ein Durchrutschen mindestens eines der Kraftübertragungselemente gestattet und sich zum anderen durch geringe Übertragungsverluste auszeichnet.

Ein solches Getriebe soll insbesondere kompakter und einfacher ausgeführt sein als die bekannten reibschlüssigen Getriebe oder die bekannten Planetengetriebe und daher preisgünstiger herzustellen sein als ein übliches Umlaufgetriebe.

Die Aufgabe wird erfindungsgemäß dadurch gelöst, daß das Umlaufgetriebe rollende Umlaufelemente besitzt, die zur Übertragung eines Drehmoments von einem Antriebselement auf ein Abtriebselement reibschlüssig zwischen dem Antriebselement und einem ortsfesten Reibelement angeordnet sind und an dem Abtriebselement gelagert sind, so daß sich die Umlaufelemente bei Drehung des Antriebselements aufgrund der Reibung zwischen den Umlaufelementen und dem Antriebselement bzw. dem ortsfesten Reibelement rollend um die Zentralachse bewegen, wobei die Umlaufelemente so mit dem Abtriebselement verbunden sind, daß sie es ebenfalls in Rotation um die Zentralachse versetzen.

Die rollenden Umlaufelemente können als Rollen, Walzen, Kegelrollen etc. ausgebildet sein, die bevorzugterweise aus Metall sind. Diese Bauweise hat gegenüber den üblichen Umlaufgetrieben den Vorteil, daß sie aufgrund der geringen Größe der rollenden Umlaufelemente kompakt ist. Auch die Herstellung von rollenden Umlaufelementen ist einfacher und preisgünstiger als die von z.B. Zahnrädern.

Das im Gehäuse ortsfest angeordnete Reibelement wird bevorzugterweise genauso wie das mit der Antriebswelle rotierende Antriebselement als Stahlring mit einer Laufbahn für die Umlaufelemente ausgebildet, so daß das rollende Umlaufelement zwischen dem ortsfesten Reibelement und dem rotierenden Antriebselement wie in einem Kugellager läuft. Dadurch sind die Übertragungsverluste extrem gering. Das Antriebselement, die rollenden Umlaufelemente und das ortsfeste Reibelement können daher übliche axiale oder radiale Wälzlager sein. Dies erlaubt eine preiswerte Konstruktion des Umlaufgetriebes.

Statt, wie es bei Walzlagern üblich ist, einen Käfig zwischen den Umlaufelementen vorzusehen, um diese auf Abstand zu halten, wird der Abstand zwischen den Umlaufelementen erfindungsgemäß durch das Abtriebselement bestimmt, welches mit der Abtriebswelle direkt verbunden ist. Die Trennung der Umlaufelemente wird dadurch erreicht, daß der "Käfig" verlängert ausgebildet ist und mit der Abtriebswelle verbunden ist, oder sogar einen Teil der Abtriebswelle bildet. Die Umlaufelemente können aber auch so auf Abstand gehalten werden, daß das mit der Abtriebswelle verbundenen Abtriebselement Stifte aufweist, die entweder zwischen die Umlaufelemente eingreifen, oder die die Umlaufelemente so aufnehmen, daß sie deren Drehachse bilden. In einer bevorzugten Ausführungsform sind die Umlaufelemente mittels Kugellagern auf den Stiften gelagert, wodurch Reibungsverluste zwischen den Umlaufelementen und dem Antriebselement weiter minimiert werden, da im gesamten Getriebe nur Rollreibung besteht.

Da sich der Käfigersatz einerseits mit den Umlaufelementen um die zentrale Achse dreht und andererseits mit der Abtriebswelle verbunden ist, wird auf diese Art eine Übertragung des Drehmomentes vom Antriebselement auf das Abtriebselement bewirkt. Im Falle daß eine Belastung der Abtriebswelle die Übertragungsfähigkeiten des Reibgetriebes übersteigt, werden die rollenden Umlaufelemente durchrutschen. Dadurch werden automatisch alle Elemente hinter dem Getriebe, wie z.B. der Motor, vor Überbelastung oder Bruch geschützt. Die Höhe der übertragbaren Kräfte hängt vor allem davon ab, wie hoch die Vorspannung zwischen den Antriebs- und Abtriebselementen und den dazwischenliegenden Umlaufelementen ist. Denn wenn diese Kraftübertragungselemente nicht auf irgeneine Weise gegeneinander gedrückt werden, rutschen die Umlaufelemente bei der geringsten Belastung durch.

Eine Vorspannung kann entweder dadurch erzeugt werden, daß das Reibelement fest in das Getriebegehäuse eingepreßt und dabei gleichzeitig gegen die anderen Kraftübertragungselemente gedrückt wird, oder aber das Reibelement wird bevorzugterweise lose im Gehäuse gelagert und gegen Verdrehen gesichert, und durch Spannelemente, wie z. B. eine Schrauben- oder Gummifeder oder andere elastische Bauelemente sorgen für den erforderlichen Anpreßdruck des ortsfesten Reibelements gegen die anderen Übertragungselemente. Auf diese Art wird eine konstante Vorspannung zwischen Antriebs- und Abtriebselement erzeugt. Durch Verkürzen oder Vergrößern des Federwegs kann eine gewünschte Vorspannung eingestellt werden. Eine solche Einstellung kann z. B. durch das Einsetzen von Unterlegscheiben zwischen Reibelement und Spannelement vorgenommen werden.

Die Sicherung eines lose gelagerten Reibelements gegen Verdrehen kann z. B. durch ein Profil am Reibelement und im Getriebegehäuseinneren, mit Paßfedern oder mittels einem Sicherungsstift gewährleistet werden. Ein Sicherungsstift bietet zusätzlich die Möglichkeit, daß durch sein Entfernen ein Durchrutschen des dann lose gelagerten Ringes gestattet wird. Auf diese Weise kann das Getriebe entkoppelt werden, d. h. die Maschine kann im Betrieb abgeschaltet werden.

In einer weiteren Ausgestaltung der Erfindung kann das ortsfeste Reibelement in dem Getriebegehäuse auch reibschlüssig eingesetzt werden, so daß bei Überbelastung der Antriebswelle nicht die rollenden Umlaufelemente durchrutschen, sondern das ortsfeste Reibelement. Dies hat den Vorteil, daß die rollenden Umlaufelemente vor Verschleiß geschützt werden, der dann nämlich zwischen dem ortsfesten Reibelement und dem Getriebegehäuse auftritt.

Bei längeren Überbelastungen werden sich die Übertragungselemente aufgrund der extremen Gleitreibung erwärmen. Diese Erwärmung kann durch Thermoelemente entweder an Getriebeteilen oder im Getriebeöl festgestellt werden und bei einer bestimmten Grenztemperatur als Signal genutzt werden, die Maschine abzuschalten, um sie vor Schaden zu sichern, und/oder ein Licht und/oder Tonsignal als Alarmvorrichtung zu aktivieren.

Die Erfindung wird im folgenden beispielhaft anhand der Figuren 1 bis 5 und a bis c beschrieben. Darin zeigen im einzelnen:
- **Fig. 1**: ein axiales Umlaufreduziergetriebe im Schnitt, dessen rollende Umlaufelemente Kugeln sind;
- **Fig. 2**: ein radiales Umlaufreduziergetriebe im Schnitt, dessen Umlaufelemente Kugeln sind;
- **Fig. 3**: ein radiales Umlaufreduziergetriebe im Schnitt, dessen Umlaufelemente auf Stiften des Abtriebselementes gelagert sind;
- **Fig. 4**: ein radiales Umlaufreduziergetriebe im Schnitt ähnlich wie in Fig. 3, dessen Antriebselement konusförmig als Teil der Antriebswelle ausgebildet ist;
- **Fig. 5**: ein axiales Umlaufreduziergetriebe im Schnitt, wie in Fig. 1 in dreistufiger Ausführung;
- **Fig. a**: eine perspektivische Darstellung eines Abtriebselementes für ein axiales Umlaufreduziergetriebe wie in Fig. 1 und 5;
- **Fig. b**: eine perspektivische Darstellung eines Abtriebselementes für ein radiales Umlaufreduziergetriebe wie in Fig. 2;
- **Fig. c**: eine perspektivische Darstellung eines Abtriebselementes für ein radiales Umlaufreduziergetriebe wie in Fig. 3.

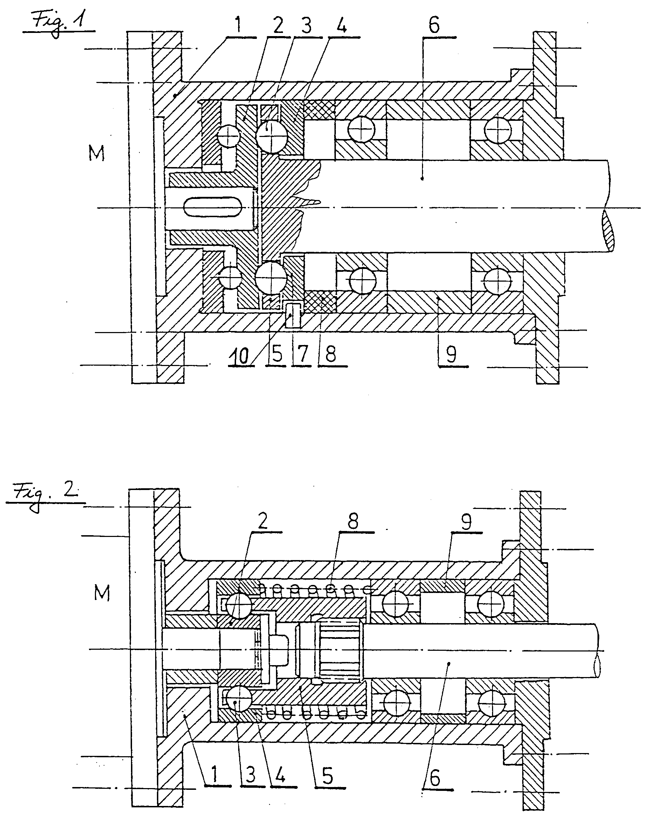

Die Umlaufreduziergetriebe der Fig. 1 bis 5 weisen auf der Antriebsseite einen Flansch auf, an dem ein Motor M angebracht wird. Die kompakte Bauweise der Umlaufreduziergetriebe ermöglicht es, daß die Außenmaße des Getriebegehäuses 1 nicht größer sind als die des angeflanschten Motors M.

Das in Fig. 1 dargestellte axiale Umlaufreduziergetriebe weist ein Abtriebselement 2 auf, das an der Antriebswelle befestigt ist und im Betrieb mit dieser rotiert. Zwischen dem Antriebselement 2, das in diesem Ausführungsbeispiel als Ring ausgebildet ist, und einem Reibelement 4, das ebenfalls als Ring ausgebildet ist und im Inneren des Getriebegehäuses 1 festsitzt, laufen die Umlaufelemente 3, in diesem Falle Kugeln. Die Umlaufelemente 3 werden durch ein Abtriebselement 5, das in Fig. a perspektivisch dargestellt ist, auf Abstand gehalten. Das Abtriebselement 5 ist mit der Abtriebswelle 6 verbunden, in Fig. 1 ist es als Teil der Abtriebswelle 6 ausgebildet. Das Abtriebselement weist auf seinem Umfang Löcher auf, in denen jeweils ein Umlaufelement 3 angeordnet ist. Auf diese Art wird durch die Bewegung der Umlaufelemente 3 um die Zentralachse des Getriebes das Abtriebselement 5 und damit direkt die Abtriebswelle 6 gedreht. Die Abtriebswelle 6 ist in diesem Ausführungsbeispiel auf zwei gewöhnlichen Rollenlagern gelagert, die durch eine Abstandscheibe 9 auf Abstand gehalten werden.

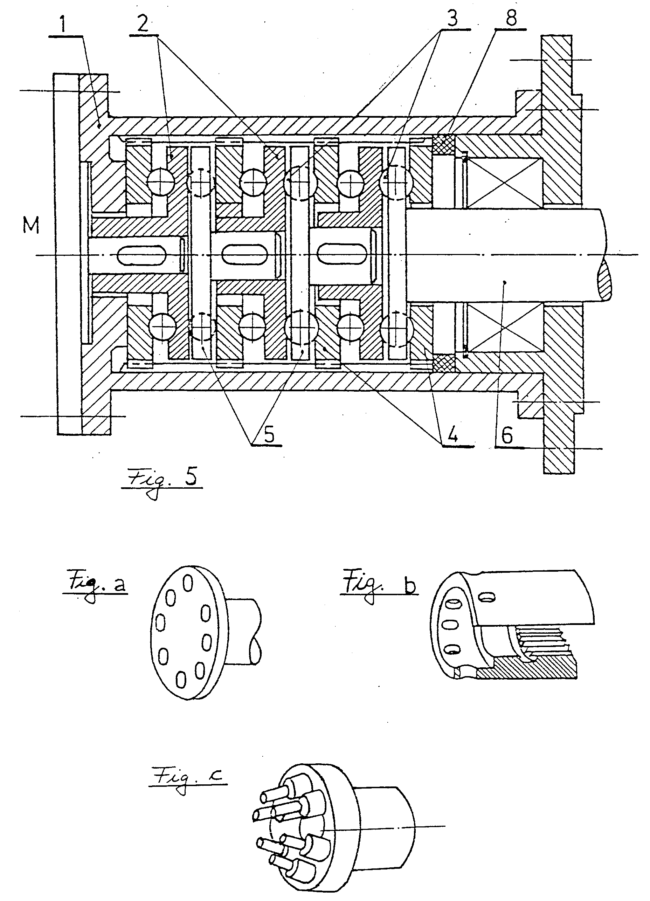

Um zu gewährleisten, daß das Reibelement bzw. der Ring 4 drehfest im Gehäuse sitzt, kann dieser mit einer Preßpassung in das Getriebegehäuse 1 eingesetzt werden. Bevorzugterweise wird das Reibelement aber lose in das Getriebegehäuse eingesetzt und zur Einstellung des erforderlichen Anpreßdrucks durch ein flexibles Spannelement 8 gegen die Umlaufelemente 3 gedrückt. Das Spannelement 8 ist in den Fig. 1, 3 und 5 als Ring ausgebildet, z. B. als Gummiring, es kann aber auch eine Schraubenfeder eingesetzt werden, wie in den Ausführungsbeispielen der Fig. 2 und 4. Auf diese Weise stehen die Kraftübertragungselemente 2, 3 und 4 unter einer definierten Vorspannung. Diese Konstruktion gestattet ein Durchrutschen der Übertragungselemente erst bei einer durch die Vorspannung definierten Belastung.

In Fig. 1 ist das Reibelement 4 lose im Getriebegehäuse 1 eingesetzt und gegen Verdrehen durch einen Sicherungsstift 10 gesichert. Das Reibelement kann daher problemlos gelöst werden, indem der Sicherungsstift 10 entfernt wird, so daß das Reibelement 4 keine Kräfte mehr übertragen kann und schon bei geringer Belastung durchdreht. Auf diese Art läßt sich das Getriebe in Leerlauf versetzen, bzw. der Abtrieb vom Antrieb entkoppeln.

Fig. 2 zeigt eine ähnliche Ausführung wie Fig. 1, jedoch ist hier das Umlaufreduziergetriebe radial anstatt axial ausgeführt. Entsprechend anders ist das Abtriebselement 5 ausgebildet. Das Abtriebselement 5 dieser Ausführungsform ist beispielhaft in Fig. b perspektivisch dargestellt und zeigt, daß, wie auch bei der axialen Variante, die als Kugeln ausgebildeten Umlaufelemente in Löchern des Abtriebselementes aufgenommen werden, und das Abtriebselement mit der Abtriebswelle verbunden ist. In diesem Ausführungsbeispiel ist das Abtriebselement als eigenständiges Bauteil ausgebildet und über ein Zahnprofil mit der Abtriebswelle formschlüssig verbunden. Eine Verspannung der Kraftübertragungselemente 2, 3 und 4 wird in diesem Falle von einer Feder 8 bewirkt. Es wird hier deutlich, daß die Kraftübertragungselemente 2, 3 und 4 mit einem gewöhnlichen Kugellager realisiert werden können.

Die in den Fig. a und b gezeigten Varianten der Abtriebselemente können auch so gestaltet sein, daß die Löcher als Nuten ausgebildet sind, die nach außen hin eine Öffnung besitzen (Fig. 2). Dies erleichtert insbesondere im zweiten Ausführungsbeispiel die Montage des Getriebes, da das Abtriebselement 5 dann sehr einfach zwischen den Kugeln eines bereits montierten Kugellagers angeordnet werden kann.

Die in Fig. 2 dargestellte Ausführungsform hat wie auch die anderen radialen Varianten gegenüber der axialen Variante den Vorteil, daß die axiale Ausführung nur ein Untersetzungsverhältnis von 2:1 aufweist, während die radialen Ausführungen größere Untersetzungsverhältnisse besitzen können, die vom Verhältnis d/D abhängen.

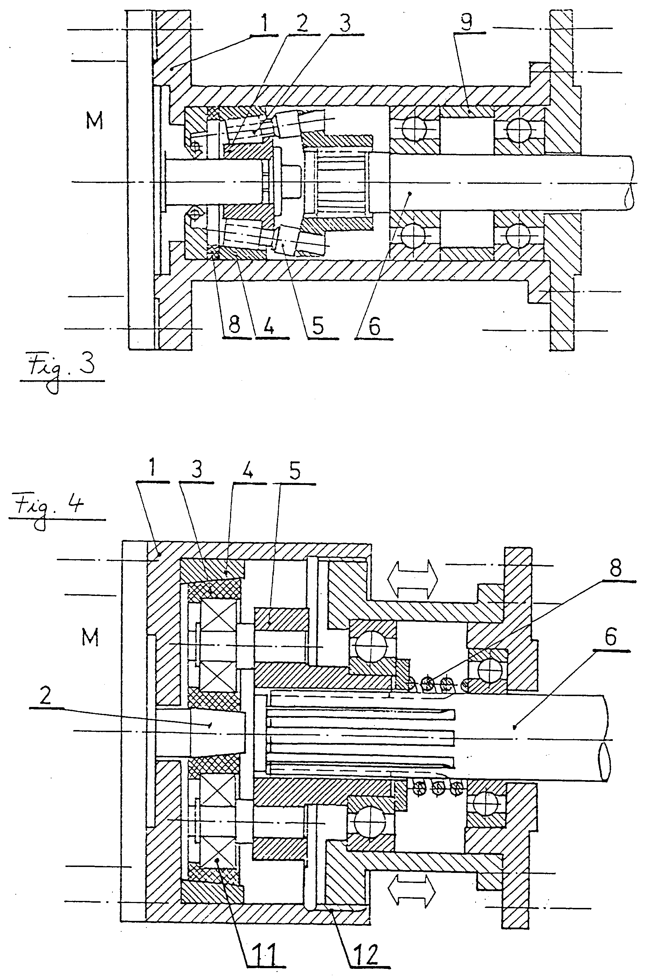

Fig. 3 zeigt eine Variante des radialen Umlaufreduziergetriebes, bei dem das Abtriebselement Stifte aufweist, die auf dem Abtriebselement eine "Krone" bilden und die in die rollenden Umlaufelemente 3, in diesem Falle Kegelrollen eingreifen, so daß die Umlaufelemente auf diesen Stiften verschleißarm gelagert sind. In Fig. c ist ein solches kronenförmiges Abtriebselement perspektivisch dargestellt.

Fig. 4 zeigt eine ähnliche Ausführung wie Fig. 3, die besonders günstig ist, da das Antriebselement 2 als integrales Bestandteil der Antriebswelle ausgeführt, indem die Antriebswelle einen konischen Bereich besitzt, auf dem die Umlaufelemente 3 direkt laufen. Durch diese Ausführungsform wird trotz der geringen Baugröße ein maximales Untersetzungsverhältnis realisiert. Die Umlaufelemente 3 sind auch in dieser Ausführungsform auf Stiften gelagert, die am Abtriebselement 5 in Form einer "Krone" befestigt sind, wobei das Abtriebselement 5 wiederum mit der Abtriebswelle 6 formschlüssig verbunden ist. In dieser Ausführungsform sind die Stifte achsparallel zur Zentralachse angeordnet, so daß eine Montage der Umlaufelemente auf die Stifte, sowie eine Gesamtmontage in das Getriebegehäuse besonders einfach ist. Durch die besonders platzsparende Gestaltung des Abtriebselement ist es möglich die Umlaufelemente nahezu reibungsfrei auf den Stiften mit Walzlagern 11 zu lagern, ohne daß die kompakte Bauweise des erfindungsgemäßen Getriebes dadurch beeinflußt wird.

Das Getriebegehäuse der in Fig. 4 dargestellten Ausführungsform ist zweiteilig gestaltet, wobei der rechte Teil über ein Gewinde 12 in den linken Teil des Getriebegehäuses eingebracht werden kann. Diese Gestaltung ermöglicht es, die für diesen Fall kegelförmig ausgeführten Umlaufelemente 3 aus dem Kontaktbereich zwischen dem Antriebselement 2 und dem feststehenden Element 4 zu bewegen, indem der rechte Getriebeteil inklusive des darin befestigten Abtriebselementes 5 mit den Umlaufelementen 3 nach rechts bewegt wird. Dies kann erreicht werden, indem der rechte Getriebegehäuseteil mittels dem Gewinde 12 von dem linken Getriebegehäuseteil wegbewegt wird, wobei die Feder 8, die für die Vorspannung bzw. Druckerzeugung zwischen den Übertragungselementen 3, 4 und 5 sorgt, zusammengedrückt wird.

Die in Fig. 3 und 4 gezeigten Ausführungsformen weisen als Umlaufelemente Kegelrollen auf, die eine Axialkraft erzeugen, welche von dem angeflanschten Motor nur aufgenommen werden kann, wenn dieser ein Axiallager besitzt.

Fig. 5 zeigt eine mehrstufige Ausführungsform der axialen Umlaufgetriebevariante aus Fig. 1. Es zeigt deutlich die optimierte Baugröße des Umlaufreduziergetriebes, die in diesem Falle eine Untersetzung von 8:1 zur Verfügung stellt.

Selbstverständlich lassen sich die anderen Ausführungsformen genauso zu mehrstufigen Getrieben erweitern. Außerdem ist es möglich die radialen Ausführungsformen entsprechend als axiale Getriebe auszuführen, die allerdings nur eine Untersetzung von 2:1 aufweisen können.

In die Getriebegehäuse aller beschriebenen Ausführungsformen wird Öl eingebracht, das zur Schmierung und Kühlung des Getriebes dient. Die dafür notwendigen Dichtungen an den Ein- und Ausgangsachsen sowie die Öffnungen, durch die Öl zu- und abgeführt wird, sind in den Zeichnungen nicht dargestellt. Auch die Thermoelemente, die bei längerem Durchrutschen der Kraftübertragungselemente aufgrund einer gemessenen Temperaturerhöhung des Getriebegehäuses und/oder des Getriebeöls ein (Warn-)Signal übertragen, das ggf. zur Abschaltung des Motors entsprechend umgewandelt wird, ist nicht dargestellt.

Anhand der beschriebenen Ausführungsbeispiele wird deutlich, daß es gelungen ist, ein kompaktes Reibgetriebe mit zentraler An- und Abtriebsachse zur Verfügung zu stellen, dessen Außenmaße nicht über die Maße des Antriebsmotors hinausreichen. Durch die Konstruktion ist es insbesondere möglich, große Untersetzungen bei geringer Baugröße zu ermöglichen, wobei die Übertragungsverluste aufgrund der eingesetzten Kugel bzw. Rollenlagerungen minimal ist. Die Gestaltung des Abtriebselementes mit kronenförmiger Stiftanordnung gewährleistet dabei eine einfache Montage des Getriebes, geringen Verschleiß der Umlaufelemente und somit eine wesentlich preiswertere Getriebekonstruktion als die bekannten Getriebekonstruktionen.

## Patentansprüche

1. Untersetzungsgetriebe kompakter Bauart in Form eines Umlaufgetriebes mit einer zentralen Drehachse für alle beweglichen Getriebeteile,
**dadurch gekennzeichnet,**
daß das Umlaufgetriebe rollende Umlaufelemente (3) besitzt, die zur Übertragung eines Drehmoments von einem Antriebselement (2) auf ein Abtriebselement (5) reibschlüssig zwischen dem Antriebselement (2) und einem ortsfesten Reibelement (4) angeordnet sind und an dem Abtriebselement (5) gelagert sind, so daß sich die Umlaufelemente (3) bei Drehung des Antriebselements (2) aufgrund der Reibung zwischen den Umlaufelementen und dem Antriebselement bzw. dem ortsfesten Reibelement rollend uni die Zentralachse bewegen, wobei die Umlaufelemente (3) so mit dem Abtriebselement (5) verbunden sind, daß sie es in Rotation uni die Zentralachse versetzen.

2. Umlaufreduziergetriebe nach Anspruch 1,
**dadurch gekennzeichnet,**
daß der Abstand zwischen den Umlaufelementen (3) durch das Abtriebselement (5) bestimmt ist.

3. Umlaufreduziergetriebe nach Anspruch 2,
**dadurch gekennzeichnet,**
daß die Umlaufelemente (3) übliche Wälzkörper wie Rollen, Walzen, Kegelrollen etc. sind.

4. Umlaufreduziergetriebe nach Anspruch 3,
**dadurch gekennzeichnet,**
daß Antriebs-, Umlauf- und Treibelemente durch ein handelsübliches Wälzlager gebildet werden, dessen Laufring das Antriebselement (2) bildet, welches mit der Antriebswelle verbunden ist, und dessen fester Ring das Reibelement (4) bildet, welches im Getriebegehäuse (1) ortsfest angeordnet ist.

5. Umlaufreduziergetriebe nach einem der Ansprüche 1 bis 4,
**dadurch gekennzeichnet,**
daß die Umlaufelemente (3) am Abtriebselement (5) auf Stiften gelagert sind, die auf dem Abtriebselement eine Art Krone bilden.

6. Umlaufreduziergetriebe nach Anspruch 5,
**dadurch gekennzeichnet,**
daß die Umlaufelemente (3) mittels Walzlagern (11) auf den Stiften des Abtriebselements (5) gelagert sind, so daß zwischen den beweglichen Teilen des Umlaufreduziergetriebes ausschließlich Rollreibung wirkt.

7. Umlaufreduziergetriebe nach Anspruch 5 oder 6,
**dadurch gekennzeichnet,**
daß das Antriebselement (2), auf dem die Umlaufelemente (3) rollen, von einen Teil der Antriebswelle gebildet wird.

8. Umlaufreduziergetriebe nach Anspruch 7,
**dadurch gekennzeichnet,**
daß das Antriebselement (2) durch einen sich konisch verjüngenden Teil der Antriebswelle gebildet wird, wodurch ein einfaches Entkoppeln der Antriebs- und Abtriebselemente ermöglicht wird.

9. Umlaufreduziergetriebe nach Anspruch 8,
**dadurch gekennzeichnet,**
daß das Getriebegehäuse (1) zweiteilig ausgeführt ist, wobei die beiden Getriebegehäuseteile durch ein Gewinde (12) miteinander verbunden sind, und wobei das Antriebselement (2) und das Reibelement (4) in dem einen Getriebegehäuseteil angeordnet sind und das Abtriebselement (5) mit den Umlaufelementen (3) in dem anderen Getriebegehäuseteil angeordnet sind, so daß durch ein Drehen eines Getriebegehäuseteils relativ zum anderen Getriebegehäuseteil entsprechend der Steigung des Gewindes (12) die Umlaufelemente mit den Abtriebs- und Reibelementen in oder aus Kontakt gebracht werden können.

10. Umlaufreduziergetriebe nach einem der vorstehenden Ansprüche,
**dadurch gekennzeichnet,**
daß das Antriebselement (2) und das Reibelement (4) mit den dazwischenliegenden Umlaufelementen (3) gegeneinander durch geeignete Spannelemente (8) vorgespannt sind.

11. Umlaufreduziergetriebe nach Anspruch 10,
**dadurch gekennzeichnet,**
daß die Spannelemente (8) Schraubenfedern oder Gummifedern sind.

12. Umlaufreduziergetriebe nach einem der vorstehenden Ansprüche,
**dadurch gekennzeichnet,**
daß das Reibelement (4) im Getriebegehäuse (1) ortsfest angebracht und durch ein lösbares Sicherungselement (10) gegen Verdrehen gesichert ist, wodurch ein Entkoppeln des Antriebs- vom Abtriebselement durch ein Lösen des Sicherungselementes (10) ermöglicht wird.

13. Umlaufreduziergetriebe nach einem der vorstehenden Ansprüche,
**dadurch gekennzeichnet,**
daß das Reibelement (4) als Ring ausgebildet ist und sein Verdrehen durch Reibhaftung zwischen dem Ring (4) und dem Getriebegehäuse (1) verhindert wird, so daß der Ring durchrutscht, wenn die an der Abtriebsseite wirkenden Kräfte die Reibhaftung übersteigen.

14. Umlaufreduziergetriebe nach einem der voranstehenden Ansprüche,
**dadurch gekennzeichnet,**
daß Thermoelemente im Getriebegehäuse (1) angebracht sind, die bei einer gemessenen Grenztemperatur signalisieren, den Motor abzuschalten und/oder ein Licht und/oder Tonsignal als Alarmvorrichtung zu aktivieren.

15. Mehrstufiges Umlaufreduziergetriebe,
**dadurch gekennzeichnet,**
daß mehrere Umlaufreduziergetriebe nach einem der vorangehenden Ansprüche hintereinandergeschaltet sind.
